# EUROPÄISCHE PATENTSCHRIFT

(11) **EP 1 925 503 B1**
(45) Veröffentlichungstag und Bekanntmachung des Hinweises auf die Patenterteilung: **21.07.2010**
(21) Anmeldenummer: 07020742.8
(22) Anmeldetag: 24.10.2007
(51) Int. Cl.: B60R 13/02, B60R 21/213, B60R 21/231

(54) **Kraftfahrzeug mit einem kopfschützenden Seitenairbag**
Vehicle with a head protecting air bag apparatus
Véhicule avec un dispositif à coussin gonflable de protection de la tête

(30) Priorität: 24.11.2006 DE 102006055507
(43) Veröffentlichungstag der Anmeldung: 28.05.2008
(73) Patentinhaber: Dr. Ing. h.c. F. Porsche AG, 70435 Stuttgart (DE)
(72) Erfinder: Benkler, Olaf, 75242 Neuhausen/Schellbronn (DE); Gayer, Benno, 71665 Vaihingen/Enz (DE); Luik, Klaus, 75417 Muehlacker (DE)

(56) Entgegenhaltungen:
- EP-A- 1 334 879
- EP-A- 1 410 957
- EP-A- 1 640 222
- US-A1- 2001 052 693
- US-A1- 2003 094 828
- US-A1- 2005 052 001
- US-A1- 2005 236 818

## Beschreibung

Die vorliegende Erfindung betrifft ein Kraftfahrzeug mit einem kopfschützenden Seitenairbag, der im Bereich eines seitlichen Dachholms angeordnet und von einer im Bedarfsfall vom Seitenairbag durchstoßbaren Verkleidung überdeckt ist, gemäß dem Oberbegriff des Anspruchs 1.

Aus der EP 1 334 879 B1 ist ein Kraftfahrzeug bekannt, wobei die Verkleidung am Dachholm seitlich in einen Himmel übergeht, der eine dem Fahrgastraum zugewandte Innenseite des Fahrzeugdaches verkleidet. Hierbei soll sich der kopfschützende Seitenairbag im Auslösefall durch einen vordefinierten Spalt in den Fahrgastraum hinein ausdehnen.

Ferner ist aus der US 2003/0094828 A1 ein Kraftfahrzeug bekannt, bei dem ein Windowbag im Dachholm untergebracht ist. Ein Befestigungsclip im oberen Bereich der A-Säulenverkleidung hält diese an der Rohbaustruktur fest. An der Rückseite der Säulenverkleidung sind Deformationsrippen angeordnet, um Belastungen auszugleichen.

Die US 2001/0052693 A1 zeigt ein gattungsgemäßes Kraftfahrzeug mit einem kopfschützenden Seitenairbag, der im Bereich eines seitlichen Dachholms angeordnet und von einer im Bedarfsfall vom Seitenairbag durchstoßbaren Verkleidung überdeckt ist. Die Verkleidung geht seitlich in einen Himmel über, der eine dem Fahrgastraum zugewandte Innenseite des Fahrzeugdaches verkleidet. Mit einem Befestigungsclip werden sowohl die Verkleidung als auch der Himmel am Dachholm befestigt.

Insbesondere bei kopfschützenden Seitenairbags, welche auch unter dem Begriff "Windowbag" bekannt sind, stellt sich das Problem, dass insbesondere bei einem schalenartigen Himmel, dieser im Auslösefall des Windowbags weder beschädigt werden, noch sich vom Dachrahmen lösen und auf die im Fahrgastraum sitzenden Personen herabfallen soll. Demzufolge muss der Windowbag so gestaltet werden, dass sein Auslösen keinen Einfluss auf den Himmel des Kraftfahrzeuges hat.

Die vorliegende Erfindung beschäftigt sich mit dem Problem, für ein Kraftfahrzeug mit einem kopfschützenden Seitenairbag der gattungsgemäßen Art eine verbesserte oder zumindest eine andere Ausführungsform anzugeben, die sich insbesondere durch einen Himmel auszeichnet, welcher durch ein Auslösen des Seitenairbags in seiner am Dachrahmen fixierten Lage nicht beeinträchtigt wird.

Dieses Problem wird erfindungsgemäß durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, einen Himmel bzw. eine, einen Seitenairbag überdeckende Verkleidung im Bereich des Seitenairbags an einem Dachholm einer Fahrzeugkarosserie zu befestigen, so dass der Seitenairbag im Auslösefall die Verkleidung durchstoßen und sich in den Fahrgastraum entfalten kann, ohne jedoch den Himmel von einer Dachkonstruktion zu lösen und dadurch beispielsweise auf die im Fahrgastraum sitzenden Fahrgäste fallen zu lassen. Bei dem Seitenairbag handelt es sich um einen kopfschützenden Airbag, auch "Windowbag" genannt, der im Bereich des seitlichen Dachholms angeordnet und von besagter Verkleidung überdeckt ist. Die Verkleidung geht dabei seitlich in den Himmel über, welcher eine dem Fahrgastraum zugewandte Innenseite des Fahrzeugdaches in bekannter Weise verkleidet. Im Übergangsbereich zwischen der Verkleidung und dem Himmel ist nun erfindungsgemäß eine Befestigungsanordnung vorgesehen, welche einerseits den Himmel und andererseits die Verkleidung am Dachholm befestigt, so dass ein Auslösen des Seitenairbags keinen Einfluss auf die Befestigung des Himmels am Dachholm hat. Eine derartige Befestigungsanordnung ist insbesondere bei Fahrzeugen von großem Vorteil, welche in diesem Bereich keinen sonst üblicherweise dort angeordneten Haltegriff aufweisen. Eine derartige Befestigungsanordnung ist weiter unerlässlich für Fahrzeuge, bei welchen beispielsweise zumindest der Himmel aus einer steifen Schale ausgebildet ist, so dass diese beim Fehlen der Befestigungsanordnung im Auslösefall des Seitenairbags auf die im Fahrgastraum sitzenden Fahrgäste fallen würde. Erfindungsgemäß ist die Befestigungsanordnung dabei so ausgestaltet bzw. angeordnet, dass sie einerseits eine zuverlässige Fixierung des Himmels am Dachholm und damit am Fahrzeugdach gewährleistet, andererseits aber eine Entfaltung des Seitenairbags im Bedarfsfall in keiner Weise behindert.

Bei einer vorteilhaften Weiterbildung der erfindungsgemäßen Lösung weist die Befestigungsanordnung eine, einen jeweiligen Randbereich der Verkleidung und des Himmels U-förmig umfassende Trägeranordnung auf. Eine derartige Trägeranordnung gewährleistet eine zuverlässige Halterung des jeweiligen Randbereiches an der Trägeranordnung und dadurch über die Trägeranordnung, welche Teil der Befestigungsanordnung ist, die Befestigung am Dachholm. Von besonderem Vorteil ist hierbei, dass eine derartig ausgebildete Trägeranordnung den jeweiligen Randbereich um- bzw. einfasst, wodurch im Vergleich zu anderen Befestigungsvarianten eine Lockerung der Befestigung über längere Zeit gesehen, verursacht durch ein Ausfransen der jeweiligen Randbereiche, weitestgehend vermieden werden kann. Die erfindungsgemäße Trägeranordnung stellt somit einen Garant für eine langlebige und zuverlässige Befestigung der Verkleidung bzw. des Himmels an der Dachkonstruktion dar.

Bei einer weiteren vorteilhaften Ausführungsform der erfindungsgemäßen Lösung weist die Trägeranordnung zumindest zwei Träger auf, welche miteinander verrastbar ausgebildet sind. Insbesondere Rastelemente vereinfachen eine Montage unter Umständen erheblich und reduzieren dadurch die Fertigungszeit und insbesondere die Fertigungskosten. Trotzdem bieten solche Rastverbindungen eine zuverlässige Befestigung der beiden Träger aneinander, welche im Bedarfsfall durch ein Entrasten auch wieder zerstörungsfrei voneinander getrennt werden können. Derartige Rastverbindungen, beispielsweise mit Rastnasen, welche in entsprechende Rastöffnungen eingreifen und in diesen verrasten, sind heutzutage einfach, kostengünstig und in nahezu beliebiger Ausführungsform herstellbar, so dass diese im Bedarfsfall auch ohne großen konstruktiven Aufwand geändert bzw. angepasst werden könnten, was sich besonders vorteilhaft auf die heutzutage sehr flexiblen Fertigungsprozesse auswirkt.

Zweckmäßig ist zumindest einer der Träger komplementär zu einer der Befestigungsanordnung zugewandten Randkontur der Verkleidung und/oder des Himmels ausgebildet. Hierbei ist insbesondere an eine flächige Anlage des Trägers an die ihm zugewandte Randkontur der Verkleidung bzw. des Himmels gedacht, wodurch neben einer rein kraftschlüssigen Verbindung auch ein Formschluss zwischen dem Träger und dem zugehörigen Randbereich erzielt werden kann, wodurch sich die Qualität der Verbindung zwischen dem Träger und der Verkleidung bzw. dem Himmel und dadurch auch die Qualität der Befestigung der beiden Komponenten am Dachholm steigern lässt. Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Schnittdarstellung im Bereich eines seitlichen Dachholms mit einer erfindungsgemäßen Befestigungsanordnung zur Befestigung einer, einen kopfschützenden Seitenairbag überdeckenden Verkleidung und eines Himmels am Dachholm,
- Fig. 2: eine Darstellung wie in Fig. 1, jedoch mit einer anderen Befestigungsanordnung,
- Fig. 3: eine Darstellung wie in Fig. 1, jedoch mit einer weiteren Befestigungsanordnung.

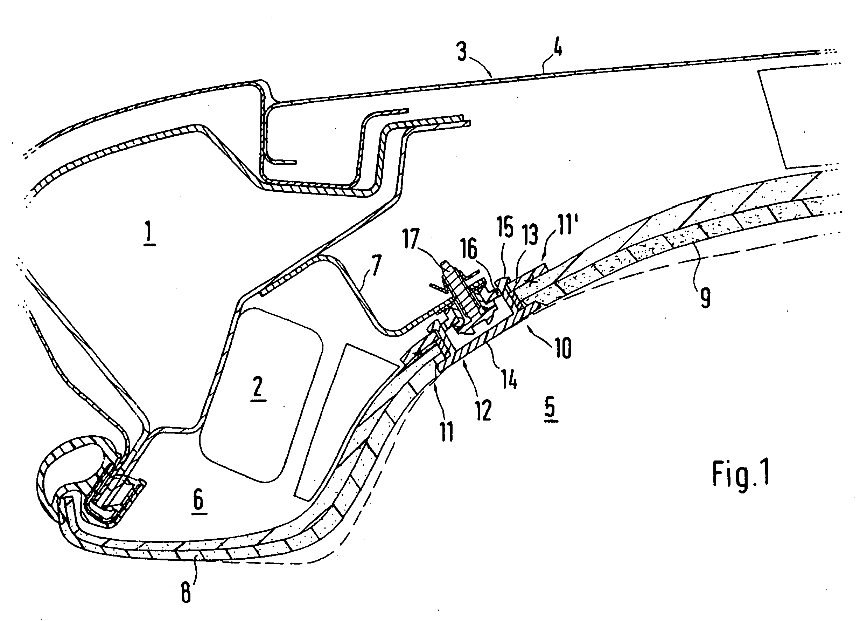

Gemäß Fig. 1 ist im Bereich eines seitlichen Dachholms 1 ein kopfschützender Seitenairbag 2, üblicherweise auch "Windowbag" genannt, angeordnet. Der Dachholm 1 verläuft dabei in Fahrzeuglängsrichtung seitlich eines Fahrzeugdaches 3, wobei die Fahrzeuglängsrichtung gemäß den Fig. 1 bis 3 senkrecht zur Bildebene verläuft. Der Dachholm 1 dient zur Aussteifung des Fahrzeugdaches und zur seitlichen Befestigung einer Dachschale 4, welche sich zwischen den beiden seitlichen Dachholmen 1 des Fahrzeuges erstreckt. Dabei ist in den Fig. 1 bis 3 lediglich einer der beiden Dachholme 1 dargestellt.

Der Seitenairbag ist gemäß den Fig. 1 bis 3 am Dachholm 1 befestigt und stützt sich an diesem ab, so dass der Dachholm 1 im Auslösefall des Seitenairbags 2 ein Widerlager für diesen bildet. Im Auslösefall, d.h. beispielsweise bei einem Seitenaufprall oder bei einem Überschlag des Kraftfahrzeugs, bläst sich der Seitenairbag 2 in bekannter Weise in Bruchteilen von Sekunden auf und erstreckt sich in vollständig aufgeblasenem Zustand in einen Fahrgastraum 5, wobei er in aufgeblasenem Zustand einen direkten Kontakt zwischen Karosserieteilen und einem Kopf eines im Fahrgastraum 5 sitzenden Fahrgastes vermeiden oder zumindest dämpfen soll. Gemäß den Fig. 1 bis 3 ist dabei der Seitenairbag 2 in nicht ausgelöstem Zustand gezeigt, in welchem er in einem Hohlraum 6 sichtgeschützt angeordnet ist. Der Hohlraum 6 wird dabei einerseits vom Dachholm 1 bzw. einem am Dachholm 1 befestigten Halter 7 und andererseits von einer Verkleidung 8 begrenzt, welche den Seitenairbag 2 vom Fahrgastraum 5 aus gesehen überdeckt. Die Verkleidung 8 ist dabei so ausgebildet, dass sie im Bedarfsfall vom Seitenairbag 2 durchstoßbar ist, so dass sich dieser in den Fahrgastraum 5 hinein erstrecken kann. Die Durchstoßbarkeit kann dabei beispielsweise über eine Sollbruchstelle in Form einer Materialschwächung ausgebildet sein. In Richtung zur Fahrzeugmitte hin, geht die Verkleidung 8 in einen Himmel 9 über, welcher eine dem Fahrgastraum 5 zugewandte Innenseite des Fahrzeugdaches 3 verkleidet. Der Himmel kann dabei in gewohnter Weise ausgebildet sein, insbesondere als ein zwischen den seitlichen Verkleidungen 8 angeordnetes Schalenelement. Denkbar ist auch, dass die Verkleidung 8 einen Bestandteil des Himmels 9 bildet.

Damit der Himmel 9 beim Auslösen des Seitenairbags 2 in seiner ursprünglichen Einbaulage verbleibt, ist wenigstens eine Befestigungsanordnung 10 vorgesehen, weiche am Übergang der Verkleidung 8 zum Himmel 9 angeordnet ist und sowohl die Verkleidung 8 als auch den Himmel 9 am Dachholm 1 fixiert. Dabei bewirkt die Befestigungsanordnung 10 gemäß den Fig. 1 bis 3 eine Befestigung der Verkleidung 8 und des Himmels 9 indirekt über den Halter 7 am Dachholm 1, wobei denkbar ist, dass der Halter 7 als Deformationselement ausgebildet ist und dadurch im Deformationsfall eine gewisse Relativbewegung zwischen dem Dachholm 1 und dem Himmel 9 bzw. der Verkleidung 8 ermöglicht. Die Deformierbarkeit des als Deformationselement ausgebildeten Halters 7 wird dabei gemäß den Fig. 1 bis 3 durch dessen im wesentlichen S-förmigen Verlauf bewirkt. Denkbar ist hierbei, dass der Halter 7 Teil der Befestigungsanordnung 10 ist.

Allen Ausführungsformen ist dabei gemein, dass die Befestigungsanordnung 10 eine, einen jeweiligen Randbereich 11, 11' der Verkleidung 8 und des Himmels 9 U-förmig umfassende Trägeranordnung 12 aufweist. Die U-förmige Umfassung des jeweiligen Randbereiches 11, 11' schützt dabei die Randbereiche 11, 11' vor einem Ausleiern bzw. Ausfransen und gewährleistet einen zuverlässigen und sicheren Halt des Himmels 9 bzw. der Verkleidung 8 an der Befestigungsanordnung 10. Die U-förmige Umfassung der jeweiligen Randbereiche 11, 11' wird dabei von zwei Trägern 13 und 14 bewirkt, welche Bestandteil der Trägeranordnung 12 sind.

Bei der gemäß Fig. 1 dargestellten Variante der Trägeranordnung 12 ist dabei ein erster Träger 13 als Platine und ein zweiter Träger 14 als mit dem ersten Träger 13 verrastbarer Deckel ausgebildet. Eine Verrastung der beiden Träger 13 und 14 erfolgt dabei über Rastnasen 15, welche gemäß der Fig. 1 beispielsweise am zweiten Träger 14 angeordnet sind und in zugehörige Rastöffnungen 16 am ersten Träger 13 eingreifen bzw. mit diesen verrasten. Desweiteren weist die Befestigungsanordnung 10 ein Fixierelement 17 auf, hier eine Schraube, welche gemäß der Fig. 1 den ersten Träger 13 am Halter 7 fixiert. Zur vereinfachten Montage kann dabei der erste Träger 13 mit einer der Dachschale 4 zugewandten Seite des Himmels 9 fest verbunden, insbesondere verklebt sein. Um darüber hinaus vom Fahrgastraum 5 aus einen hohen ästhetischen Anspruch erfüllen zu können, ist der zweite Träger 14 vorzugsweise gleichzeitig als Verblendelement ausgebildet, welches einerseits das Fixierelement 17 verblendet und andererseits einen harmonischen Übergang zwischen der Verkleidung 8 und dem Himmel 9 schafft.

Um die Umgreifungswirkung der beiden Träger 13 und 14 bezüglich der Randbereiche 11, 11' steigern zu können, kann zumindest einer der beiden Träger 13, 14 komplementär zu einer der Befestigungsanordnung 10 zugewandten Randkontur der Verkleidung 8 und/oder des Himmels 9 ausgebildet sein, wodurch der jeweilige Randbereich 11, 11' formschlüssig umgriffen werden kann. Denkbar ist auch eine Art Klemmwirkung, welche vom zweiten Träger 14 auf eine dem Fahrgastraum 5 zugewandte Seite des Himmels 9 ausgeübt wird, sofern der zweite Träger 14 mit dem ersten Träger 13 verrastet wird.

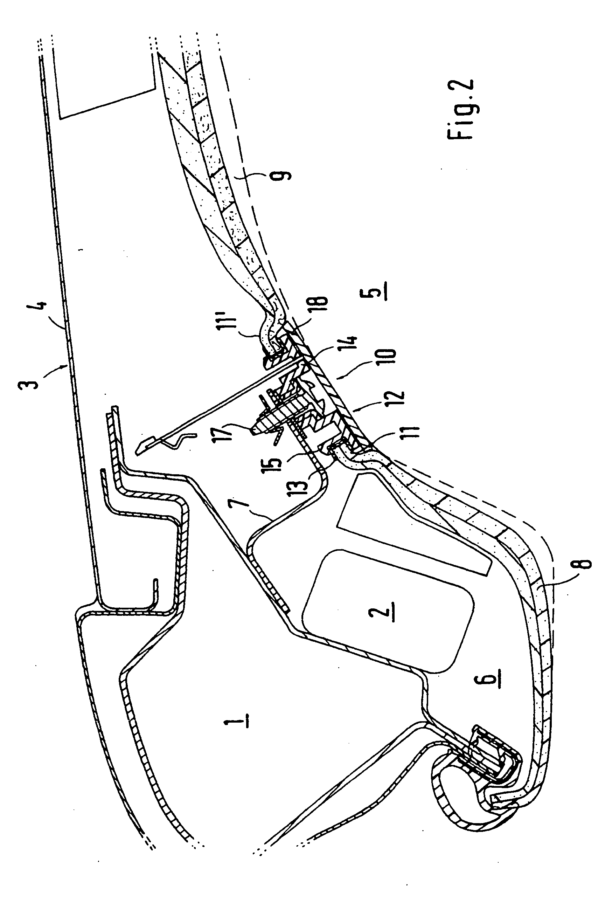

Einen sehr ähnlichen Aufbau, wie der in Fig. 1 gezeigte, ist auch in Fig. 2 dargestellt, wobei hier der erste Träger 13 U-förmig ausgebildet ist und den Randbereich 11 der Verkleidung 8 bzw. den Randbereich 11' des Himmels 9 U-förmig umfasst. Mit dem ersten Träger 13 wiederum verrastet ist der zweite Träger 14 der Trägeranordnung 12, wobei hier eine Fixierung des zweiten Trägers 14 am Halter 7 erfolgt. Der erste Träger 13 kann dabei ringförmig oder als im wesentlichen gerade Schiene ausgebildet sein, wodurch sich eine punktförmige bzw. linienförmige Befestigungsanordnung 10 ergibt. Auch bei der Ausführungsform gemäß der Fig. 2 wird der hohe ästhetische Anspruch bezüglich einer Sicht vom Fahrgastraum 5 auf die Befestigungsanordnung 10 dadurch erreicht, dass der Träger 14 als Verblendelement ausgebildet ist bzw. eine Verblendschale 18 trägt. Diese kann wahlweise einstückig mit dem Träger 14 oder separat von diesem ausgebildet sein.

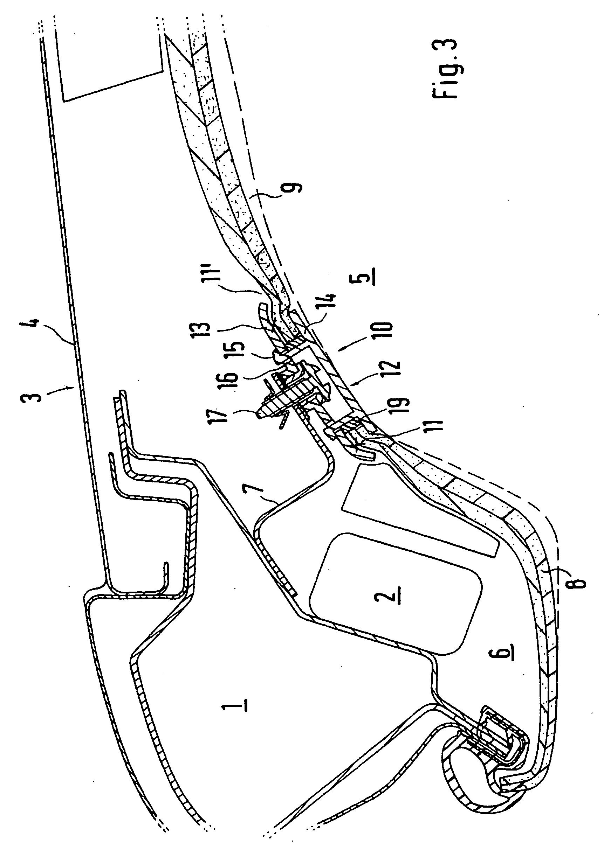

Bei der Ausführungsform gemäß der Fig. 3 ist wiederum der erste Träger 13 über das Fixierelement 17 am Halter 7 festgelegt, wobei der zweite Träger 14 über entsprechende Rastnasen 15 mit Rastöffnungen 16 im ersten Träger 13 verrastet und dadurch zuverlässig an diesem fixiert ist. Im Unterschied zu den in den Fig. 1 und 2 gezeigten Trägeranordnungen 12, ist bei der Trägeranordnung 12 gemäß der Fig. 3 zwischen den beiden Trägern 13 und 14 ein Abstandselement 19 angeordnet, welches den Abstand zwischen den beiden Trägern 13 und 14 begrenzt. Das Abstandselement 19 kann dabei insbesondere ringförmig ausgebildet sein. Ebenso wie bei den in den Fig. 1 und 2 gezeigten Befestigungsanordnungen 10, kann auch bei der Befestigungsanordnung 10 gemäß der Fig. 3 der erste Träger 13 mit einer der Dachschale 4 zugewandten Seite des Himmels 9 bzw. der Verkleidung 8 fest verbunden, insbesondere verklebt sein. Allen Varianten ist dabei gemein, dass sie relativ einfach umsetzbar sind, eine hohe Positioniergenauigkeit ermöglichen und prozesssicher angewendet werden können, wobei sich die Variante nach Fig. 1 zusätzlich durch eine besonders gute Krafteinleitung auszeichnet. Zudem sind insbesondere die Befestigungsanordnungen 10 der Fig. 1 und 3 als einteilige und dadurch kostengünstige Varianten herzustellen.

## Patentansprüche

1. Kraftfahrzeug, mit einem kopfschützenden Seitenairbag (2), der im Bereich eines seitlichen Dachholms (1) angeordnet und von einer im Bedarfsfall vom Seitenairbag (2) durchstoßbaren Verkleidung (8) überdeckt ist, wobei die Verkleidung (8) seitlich in einen Himmel (9) übergeht, welcher eine dem Fahrgastraum (5) zugewandte Innenseite des Fahrzeugdaches (3) verkleidet, wobei wenigstens eine Befestigungsanordnung (10) vorgesehen ist, welche am Übergang der Verkleidung (8) zum Himmel (9) angeordnet ist und sowohl die Verkleidung (8) als auch den Himmel (9) am Dachholm (1) befestigt, **dadurch gekennzeichnet, dass** die Befestigungsanordnung (10) einen als Deformationselement ausgebildeten Halter (7) aufweist, der mit dem Dachholm (1) verbunden ist.

2. Kraftfahrzeug nach Anspruch 1, **dadurch gekennzeichnet, dass** die Befestigungsanordnung (10) eine, einen jeweiligen Randbereich (11,11') der Verkleidung (8) und des Himmels (9) U-förmig umfassende Trägeranordnung (12) aufweist.

3. Kraftfahrzeug nach Anspruch 2, **dadurch gekennzeichnet, dass** die Trägeranordnung (12) zumindest zwei Träger (13,14) umfasst.

4. Kraftfahrzeug nach Anspruch 3, **dadurch gekennzeichnet, dass** die Befestigungsanordnung (10) ein Fixierelement (17), insbesondere eine Schraube, aufweist, weiche zumindest einen der beiden Träger (13,14) am Halter (7) festlegt.

5. Kraftfahrzeug nach einem der Ansprüche 3 oder 4, **dadurch gekennzeichnet, dass** die beiden Träger (13,14) der Trägeranordnung (12) miteinander verrastbar ausgebildet sind.

6. Kraftfahrzeug nach einem der Ansprüche 3 bis 5, **dadurch gekennzeichnet, dass** einer der Träger (13,14) als ein dem Fahrgastraum (5) zugewandtes Verblendelement (18) ausgebildet ist oder ein solches aufweist.

7. Kraftfahrzeug nach einem der Ansprüche 3 bis 6, **dadurch gekennzeichnet, dass** zumindest einer der Träger (13,14) komplementär zu einer der Befestigungsanordnung (10) zugewandten Randkontur der Verkleidung (8) und/oder des Himmels (9) ausgebildet ist.

8. Kraftfahrzeug nach einem der Ansprüche 3 bis 7, **dadurch gekennzeichnet, dass** zwischen den beiden Trägern (13,14) der Trägeranordnung (12) ein Abstandselement (19) angeordnet ist.

9. Kraftfahrzeug nach Anspruch 8, **dadurch gekennzeichnet, dass** das Abstandselement (19) ringförmig ausgebildet ist.

## Claims

1. Motor vehicle, with a head-protecting side airbag (2) which is arranged in the region of a lateral roof strut (1) and is covered by a panel (8) which can be pierced by the side airbag (2) when the need arises, the panel (8) merging laterally into a roof lining (9) which covers the vehicle roof (3) on the inside facing the passenger compartment (5), and at least one fastening arrangement (10) being provided which is arranged at the transition of the panel (8) to the roof lining (9) and fastens both the panel (8) and the roof lining (9) to the roof strut (1), **characterized in that** the fastening arrangement (10) has a holder (7) which is designed as a deformation element and is connected to the roof strut (1).

2. Motor vehicle according to Claim 1, **characterized in that** the fastening arrangement (10) has a support arrangement (12) which surrounds a respective edge region (11, 11') of the panel (8) and of the roof lining (9) in a U-shaped manner.

3. Motor vehicle according to Claim 2, **characterized in that** the support arrangement (12) comprises at least two supports (13, 14).

4. Motor vehicle according to Claim 3, **characterized in that** the fastening arrangement (10) has a fixing element (17), in particular a screw, which fixes at least one of the two supports (13, 14) to the holder (7).

5. Motor vehicle according to either of Claims 3 or 4, **characterized in that** the two supports (13, 14) of the support arrangement (12) are designed in a manner such that they can be latched to each other.

6. Motor vehicle according to one of Claims 3 to 5, **characterized in that** one of the supports (13, 14) is designed as a facing element (18) which faces the passenger compartment (5), or has such an element.

7. Motor vehicle according to one of Claims 3 to 6, **characterized in that** at least one of the supports (13, 14) is designed in a complementary manner to an edge contour of the panel (8) and/or of the roof lining (9), which edge contour faces the fastening arrangement (10).

8. Motor vehicle according to one of Claims 3 to 7, **characterized in that** a spacer element (19) is arranged between the two supports (13, 14) of the support arrangement (12).

9. Motor vehicle according to Claim 8, **characterized in that** the spacer element (19) is of annular design.

## Revendications

1. Véhicule automobile, avec un coussin gonflable latéral (2) de protection de la tête qui est disposé dans la zone d'une traverse de toit (1) latérale et recouvert par un revêtement (8) pouvant être percé si nécessaire par le coussin gonflable latéral (2), le revêtement (8) se transformant latéralement en un habillage de plafond (9) revêtant un habitacle (5) orienté vers le côté intérieur du toit de véhicule (3), au moins un dispositif de fixation (10) étant prévu lequel est disposé au niveau de la zone de transition prévue entre le revêtement (8) et l'habillage de plafond (9) et étant fixé tant au revêtement (8) qu'à l'habillage de plafond (9) au niveau de la traverse de toit (1), **caractérisé en ce que** le dispositif de fixation (10) présente une console (7) réalisée sous la forme d'un élément de déformation et reliée à la traverse de toit (1).

2. Véhicule automobile selon la revendication 1, **caractérisé en ce que** le dispositif de fixation (10) comporte un dispositif de support (12) comprenant une zone de bordure (11, 11') respective du revêtement (8) et de l'habillage de plafond (9) prenant une forme en U.

3. Véhicule automobile selon la revendication 2, **caractérisé en ce que** le dispositif de support (12) comporte au moins deux supports (13, 14).

4. Véhicule automobile selon la revendication 3, **caractérisé en ce que** le dispositif de fixation (10) comporte un élément de fixation (17), notamment une vis, qui fixe au moins un des deux supports (13, 14) à la console (7).

5. Véhicule automobile selon l'une quelconque des revendications 3 ou 4, **caractérisé en ce que** les deux supports (13, 14) du dispositif de support (12) sont réalisés de façon à s'encliqueter l'un l'autre.

6. Véhicule automobile selon l'une quelconque des revendications 3 à 5, **caractérisé en ce qu'**un des supports (13, 14) est réalisé sous la forme d'un élément de placage (18) orienté vers l'habitacle (5) ou comporte un tel élément.

7. Véhicule automobile selon l'une quelconque des revendications 3 à 6, **caractérisé en ce qu'**au moins un des supports (13, 14) est réalisé de façon complémentaire à un des dispositifs de fixation (10) orienté vers le contour de bordure du revêtement (8) et/ou de l'habillage de plafond (9).

8. Véhicule automobile selon l'une quelconque des revendications 3 à 7, **caractérisé en ce qu'**un élément d'écartement (19) est disposé entre les deux supports (13, 14) du dispositif de support (12).

9. Véhicule automobile selon la revendication 8, **caractérisé en ce que** l'élément d'écartement (19) prend une forme annulaire.
